# EUROPEAN PATENT SPECIFICATION

(11) **EP 0 483 161 B1**
(45) Date of publication and mention of the grant of the patent: **29.06.1994**
(21) Application number: 90908726.4
(22) Date of filing: 26.04.1990
(51) Int. Cl.: F25D 13/04, F25D 17/02, F25B 7/00

(54) **REFRIGERATION AND FREEZING PLANT**
KÜHL- UND GEFRIERANLAGE
INSTALLATION DE REFRIGERATION ET DE CONGELATION

(30) Priority: 24.05.1989 SE 8901843
(43) Date of publication of application: 06.05.1992
(73) Proprietor: VP ENERGISYSTEM I PITEA AB, S-941 31 Pitea (SE)
(72) Inventor: ENGSTRÖM, Bernt, S-941 34 Pitea (SE)
(74) Representative: Delhage, Einar
(86) International application number: SE9000280
(87) International publication number: WO9014566

(56) References cited:
- EP-A- 0 340 115
- DE-A- 2 112 362
- DE-A- 2 401 556
- DE-C- 372 897
- US-A- 4 344 296

## Description

The present invention relates to a refrigeration plant comprising a central refrigeration unit including means for cooling a cool transfer medium, at least one refrigerated space, at least one freezed space, a local refrigeration unit having an evaporator in the freezed space for direct cooling thereof, and a condensor, a cooled transfer circuit connecting the central refrigeration unit to the refrigerated space and to the condensor of the local refrigeration unit.

Due to the increasing environment consciousness during recent years the use of so called CFC refrigerants and halones has been questioned. The first-mentioned refrigerants are also known under the trade name "Freon".

There are, however, less harmful refrigerants, e.g. the well known R22, which has a high specific refrigerating effect. However, certain limitations prevail for this refrigerant at high condensing temperature if the evaporating temperature is low, such as in a usual freezing plant in a store. The necessary low condensing temperatures do not make it possible to recover condensing heat in a simple way for space heating or similar.

The premises with cooling and freezing plants which today are newly built and renovated, normally do not obtain a design that in a maximal way satisfies the requirements for reduction of the refrigerant quantity and the use of less harmful refrigerants.

EP-A-0 340 115 (an article 54 (3) document) discloses a refrigerating plant having at least two spaces which are operated at different temperatures by circuits which can be defined as cooling and freezing spaces. The refrigerating plant comprises a central unit connected for indirect cooling of the cooling spaces by means of a cold transfer medium which is cooled in the central unit and, besides being conducted to the cooling spaces, is also conducted to a condensor in a local cooling unit arranged in connection with and for the freezer cabinet.

The object of the present invention is to provide a refrigeration plant which satisfies the requirements mentioned to a very great extent.

According to the invention this has been attained in that the cold transfer circuit receives the secondary refrigerant from the central refrigeration unit for circulating it to the refrigerated space so as to indirectly cool the refrigerated space, and to the condensor of the local refrigeration unit.

By means of the invention the following advantages are attained:
1. The condensing temperature can be kept low by means of the circulating cold transfer medium from the cooling plant which also makes possible the use of the refrigerant R22, which is less harmful to the ozone layer, also at the low evaporation temperatures which are suitable in a freezer cabinet or a freezer chamber.
2. The refrigerant amount can be highly reduced due to the fact that the compressor and the condenser may be located in direct vicinity of the freezer space.
3. The risks of great refrigerant discharges is minimized in a plant with several freezer spaces due to the use of smaller selfcontained local cooling units.
4. The condensing temperature may be kept very low resulting in a high efficiency (coefficient of cooling performance).
5. The condenser heat is conducted away with the circulating refrigerant and may be regained in a cooling unit located in a suitable spot.
6. The strong need of cleaning the condenser in existing local cooling units with a compressor and an air cooled condenser beneath the cabinet has been completely eliminated since the cooling cold transfer medium is entirely entrapped implying that the coefficient of cooling performance alway may be kept high.
7. The invention makes possible the use of existing freezer cabinets after a small modification.

The invention will now be described more closely with reference to the appended drawing, on which
Figure 1 illustrates a schematic circuit of a traditional system for cooling and freezing installations, and
Figure 2 illustrates a schematic circuit of a cooling and freezing plant according to the invention.

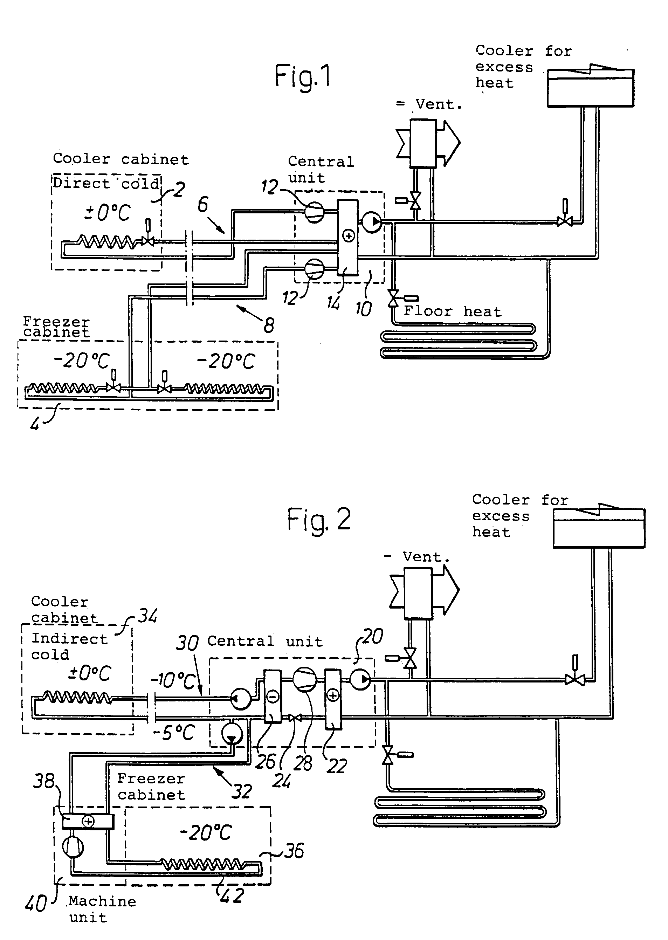

In the traditionally designed cooling and freezing plant according to Figure 1 cooling and freezing cabinets, exmplified by the boxes 2 and 4, respectively, are cooled via long pipes 6 and 8, respectively, which conduct Freon to the cooling spaces for direct cooling. Via compressors 12 arranged in the central cooling unit 10 the Freon in a conventional way is allowed to pass a condenser 14 on its flow cycle. In the condenser the refrigerant can be in heat exchanging connection with a suitable heat transfer medium for utilizing excess heat in different ways, e.g. for a floor heat loop, an air heating system, or venting away.

Due to the long pipes to the cooling and freezing spaces, and thereby the need of a great amount of refrigerant, there is a great risk of essential discharges of Freon in case of leakage or similar.

In Figure 2 the central unit indicated 20 is designed, in a way known per se, for so called "indirect cooling". This implies that the refrigerant flows in a closed circuit from the condenser designated 22 via a throttle valve 24, an evaporator 26 and via the compressor designated 28 back to the condenser 22. In the cold generator 26 the refrigerant is in heat exchanging connection with a cold transfer medium circulating in a pipe system 30, 32 to cooling and freezing spaces, respectively, which are exemplified at 34 and 36, respectively. In the cooling cabinet 34 the cold transfer medium absorbs heat in tube batteries located within the space in a conventional way. The cold transfer medium pipes 32 lead to a condenser 38 in a local cooling unit 40 where the cold transfer medium flowing in the pipes 32 is in heat exchange contact with the refrigerant used in the local cooling unit 40, and flowing through an evaporator 42 arranged in the freezer cabinet 36.

The cold transfer medium flowing in the pipe system 30, 32 can be a mixture of alcohol and water or other conventional mixture. In the Figure an input temperature of the cold transfer medium of -10°C and a return temperature of -5°C is illustrated as examples.

Due to the fact that cooling show cases and cooling chambers have moderate temperature requirements it is possible to keep a desired temperature in this way. At these temperatures also the cold transfer medium has an acceptable viscocity. The cold transfer medium pipes can be insulated in a simple way to avoid condenser water or cold damages on the surroundings, and absorbation of too much heat on its way to the cooling point.

These moderate temperature requirements make it possible to use the refrigerant R22 in the central unit, also if the condensing temperature is increased in order to make heat recovery interesting.

To obtain the required low temperature in the freezer cabinet, it is once again possible to use the less harmful refrigerant R22 due to the fact that the condensing temperature can be kept low by means of the circulating cold transfer medium from the central unit 20. By locating the small machine unit in direct connection with the freezing cabinet the plant is sectioned into small separate refrigerant circuits, whereby discharge due to any leakage is limited as to its amount.

It is easily realized that the advantages of the invention described by way of introduction are obtained with a cooling and freezing plant of the kind described with reference to Figure 2.

## Claims

1. A refrigeration plant comprising
a central refrigeration unit (20) including means for cooling a cold transfer medium,
at least one refrigerated space (34),
at least one freezed space (36),
a local refrigeration unit (40) having an evaporator in the freezed space (36) for direct cooling thereof, and a condenser (38),
a cold transfer circuit (30,32) connecting the central refrigeration unit to the refrigerated space (34) and to the condenser of the local refrigeration unit (40), and receiving said cold transfer medium from said central refrigeration unit (40) for circulating it to the refrigerated space (34) so as to indirectly cool the refrigerated space (34), and to the condensor (38) of the local refrigeration unit (40).

## Patentansprüche

1. Kühlanlage mit
einem zentralen Kühlaggregat (20) mit Mitteln zum Kühlen eines Kälteübertragungsmediums,
wenigstens einem Kühlraum (34),
wenigstens einem Gefrierraum (36),
einem lokalen Kühlaggregat (40), das einen Verdampfer in dem Gefrierraum (36) zu dessen direkten Kühlen, und einen Kondensator (38) aufweist,
einer Kälteübertragungs-Leitungsanordnung (30, 32), welche das zentrale Kühlaggregat an den Kühlraum (34) und an den Kondensator des lokalen Kühlaggregats (40) anschließt und das Kälteübertragungsmedium von dem zentralen Kühlaggregat (20) erhält, um das Kälteübertragungsmedium zu dem Kühlraum (34) zum indirekten Kühlen des Kühlraums und zu dem Kondensator (38) des lokalen Kühlaggregats (40) zu zirkulieren.

## Revendications

1. Installation de réfrigération comprenant :
une unité de réfrigération centrale (20) comprenant des moyens pour refroidir un milieu de transfert du froid,
au moins un espace réfrigéré (34),
au moins un espace congelé (36),
une unité de réfrigération locale (40) possédant un évaporateur dans l'espace congelé (36) pour un refroidissement direct de celui-ci, et un condensateur (38),
un circuit de transfert du froid (30, 32) reliant l'unité de réfrigération centrale à l'espace réfrigéré (34) et au condensateur de l'unité de réfrigération locale (40), et recevant ledit milieu de transfert du froid de ladite unité de réfrigération centrale (40) pour le faire circuler vers l'espace réfrigéré (34) de façon à refroidir indirectement l'espace réfrigéré (34), et vers le condensateur (38) de l'unité de réfrigération locale (40).
